# EUROPÄISCHE PATENTSCHRIFT

(11) **EP 1 332 626 B1**
(45) Veröffentlichungstag und Bekanntmachung des Hinweises auf die Patenterteilung: **03.03.2010**
(21) Anmeldenummer: 01969669.9
(22) Anmeldetag: 30.08.2001
(51) Int. Cl.: H04N 13/02, H04N 13/04

(54) **SYNCHRONISIERUNG EINER STEREOSKOPISCHEN KAMERA**
SYNCHRONIZATION OF A STEREOSCOPIC CAMERA
SYNCHRONISATION DE CAMERAS STEREOSCOPIQUES

(30) Priorität: 06.09.2000 DE 10044032
(43) Veröffentlichungstag der Anmeldung: 06.08.2003
(73) Patentinhaber: Deutsche Telekom AG, 53113 Bonn (DE)
(72) Erfinder: TRINKEL, Marian, 52372 Kreuzau OT Untermaubach (DE); BERSIK, Gerhard, 51519 Odenthal-Voiswinkel (DE)
(74) Vertreter: COHAUSZ DAWIDOWICZ HANNIG & SOZIEN
(86) Internationale Anmeldenummer: PCT/EP2001/009982
(87) Internationale Veröffentlichungsnummer: WO 2002/021852

(56) Entgegenhaltungen:
- WO-A-97/35439
- US-A- 5 903 303

## Beschreibung

Die vorliegende Erfindung betrifft ein Verfahren zur Synchronisation der Aufzeichnungen zweier zur dreidimensionalen Darstellung einer Bildsequenz parallel betriebener Video-Kameras, insbesondere zweier digital aufzeichnender Videorecorder. Die Erfindung betrifft gleichfalls ein System zur Realisierung des Verfahrens.

Es sind im Bereich der professionellen Film- und Videoaufzeichnungen Kameras bekannt, die über zwei gleichgerichtete Objektive eine parallele Aufzeichnung von Bildsequenzen zulassen. Die Synchronisation der Kameras und der Projektoren erfolgt elektronisch und ist entsprechend aufwendig. Wegen des hohen finanziellen Aufwandes sind diese Systeme für den privaten Nutzer nicht geeignet, zumal zur Bedienung der komplexen Systeme eine entsprechende Ausbildung notwendig ist.

Aufgabe der vorliegenden Erfindung ist es, ein Verfahren zu schaffen, das mit einfachen und preiswerten Mitteln eine Synchronisierung der Aufzeichnungen zweier handelsüblicher Video-Kameras mit hoher Präzision zuläßt. Es ist gleichfalls die Aufgabe der Erfindung, ein System zur Realisierung des Verfahrens zu schaffen.

Die Erfindung ist in Anspruch 1 angegeben. Vorteilhafte Ausführungsformen sind in den abhängigen Ansprüchen angegeben.

Wesentlicher Gesichtspunkt der Erfindung ist es, in das Blickfeld der beiden parallel laufenden Kameras ein Lichtsignal einzubringen und wahlweise ein Akustiksignal aufzuzeichnen, was von den Kameras gleichzeitig aufgezeichnet wird und das bei der Abspielung zur Synchronisation der Aufzeichnungen verwendet werden kann. Mit dem Lichtsignal wird sozusagen eine gemeinsame "Filmische" Klappe für beide Kameras realisiert. Dabei ist es unerheblich, ob mit beiden Kameras ein und dasselbe, oder ob mit jeder Kamera ein eigenes Lichtsignal aufgenommen wird. Zwei Lichtsignale müssen allerdings zeitgleich erfolgen, was im Falle zweier Leuchtdioden vorteilhafter Weise über eine gemeinsame Spannungsversorgung geschieht. Bei der späteren Überblendung der Aufzeichnungen werden die Lichtsignale als Markierungen für die Synchronisation der beiden Filme benutzt.

Die Vorteile der Erfindung liegen in der Möglichkeit der einfachen und kostengünstigen Realisierung. Mit der Erfindung ist es möglich, handelsübliche Videorecorder zur Aufzeichnung dreidimensionaler Filme zu Verwenden. Dabei ist die Synchronisation so präzise, daß daraus eine 3-D Darstellung mit hoher Qualität erfolgt. Mit der Erfindung wird die 3-D Aufnahme für den Massenmarkt interessant. Bei der Verwendung digitaler Kameras ist die Wiedergabe auf herkömmlichen PC's und Fernsehgeräten möglich. Für den Anwender bietet die Erfindung das Erlebnis des plastischen Sehens. So wird der 3-D Effekt ohne PC-Annimation ermöglicht.

Es ist vorteilhaft, die beiden Kameras auf einer gemeinsamen Halterung zu einem System zu kombinieren. Das erfindungsgemäße System wird dann mit Mitteln ausgestattet, die ein zumindest zeitweises Positionieren mindestens einer Lichtquelle im Blickfeld beider Kameras ermöglichen. Beide Kameras können dann wie eine bedient werden. Besonders vorteilhaft, weil kostengünstig ist es, die Mittel über eine verschwenkbare Halterung zu realisieren, mit der eine Lichtquelle vor beide oder zeitgleich jeweils eine Lichtquelle vor jedes der beiden Objektive verschwenkt wird.

Um die Bedienung zu vereinfachen, ist es zudem vorteilhaft, die Auslöser beider Kammeras mechanisch oder elektronisch zu koppeln. In einer besonders vorteilhaften Ausführungsform werden die Lichtquellen beim Betätigen des gemeinsamen Auslösers eingeschaltet. So wird gewährleistet, daß beim späteren Zusammenschnitt zu Beginn einer jeden Filmsequenz eine Synchronisation beider Aufzeichnungen möglich ist. Um auch innerhalb der laufenden Filmsequenz die Güte der Synchronisation überprüfen zu können ist es vorteilhaft, die Lichtquelle mit einer zyklischen Wiederkehr vor dem oder den Objektiven zu positionieren und einzuschalten. Zudem ist es vorteilhaft, eine Steuerelektronik vorzusehen, die ein zeitgleiches Einschalten der beiden Lichtquellen ermöglicht.

Besonders einfach ist es, die Lichtquellen mit Leuchtdioden zu realisieren. Diese sind in beliebigen Größen, Leuchtstärken und Farben erhältlich und eignen sich wegen des geringen Nachglimmens besonders zur Erzeugung kurzzeitiger Lichtsignale.

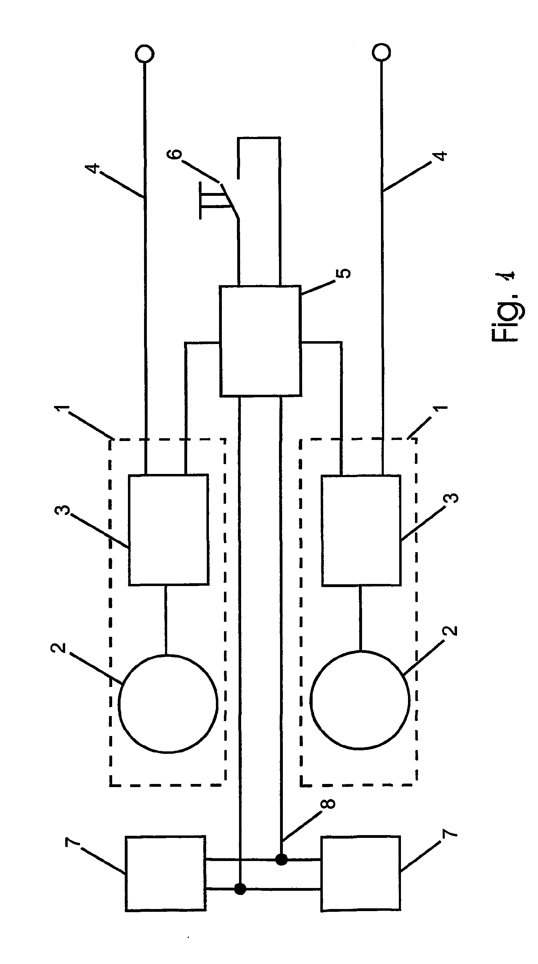

Die Erfindung wird im folgenden anhand der Figur näher beschrieben.

In der Figur sind schematisch zwei Camcorder 1 der klassischen Art mit ihren Objektiven 2 und ihrer Elektronik 3 dargestellt. Beide sind auf einer nicht dargestellten gemeinsamen Halterung montiert. Die von den Camcordern aufgenommenen Bildsequenzen können über Signalleitungen 4 abgegriffen werden. Erfindungsgemäß sind beide Camcorder 1 über eine gemeinsame Steuerelektronik 5 gekoppelt, an der ein gemeinsamer Auslöser 6 angeschlossen ist.

Erfindungsgemäß sind nicht dargestellte Mittel vorgesehen, die es ermöglichen, zeitweise jeweils eine Leuchtdiode 7 vor jedes der Objektive 2 zu verschwenken. Die Leuchtdioden 7 werden ebenfalls von der Steuerelektronik 5, mit der sie über Leitungen 8 verbunden sind, synchron erregt.

## Patentansprüche

1. Verfahren zur Synchronisation der Aufzeichnungen zweier zur dreidimensionalen Darstellung einer Bildsequenz parallel betriebener Video-Kameras beim Abspielen
**dadurch gekennzeichnet, daß** bei der Aufzeichnung in das Blickfeld der beiden Video-Kameras (1) ein Lichtsignal eingeblendet wird, das von beiden Video-Kameras (1) gleichzeitig aufgezeichnet wird und die Wiedergabe der Aufzeichnungen mit dem aufgezeichneten Lichtsignale synchronisiert wird, wofür beim Überblenden der Aufzeichnungen die Lichtsignale als Markierungen für die Synchronisation der beiden Filme benutzt werden.

2. Verfahren nach Anspruch 1,
**dadurch gekennzeichnet, daß** vor jedes der beiden Objektive (2) je eine Lichtquelle (7) positioniert wird, wobei beide Lichtquellen (7) über eine gemeinsame Spannungsversorgung zeitgleich eingeschaltet werden.

3. Verfahren nach Anspruch 1 oder 2,
**dadurch gekennzeichnet, daß** die Auslöser beider Kameras (1) mechanisch oder elektronisch gekoppelt sind.

4. Verfahren nach einem der vorherigen Ansprüche, **dadurch gekennzeichnet, daß** von beiden Video-Kameras ein Akustik-Signal gleichzeitig aufgezeichnet und bei der Abspielung zur Synchronisation verwendet wird.

5. Verfahren nach Anspruch 3, **dadurch gekennzeichnet, daß** die Lichtquellen (7) beim Betätigen des gemeinsamen Auslösers (6) kurzzeitig eingeschaltet werden.

6. Verfahren nach einem der vorherigen Ansprüche,
**dadurch gekennzeichnet, daß** die Lichtquellen (7) mit einer zyklischen Wiederkehr eingeschaltet werden.

## Claims

1. Method for synchronisation of the recordings of two video cameras operated in parallel for the three dimensional display of an image sequence when playing back
**characterised in that** a light signal is faded into the field of view of both video cameras (1) when recording, which is recorded simultaneously by both video cameras (1), and the replay of the recordings is synchronised with the light signal recorded, for which the light signals are used as marks for the synchronisation of both films when cross fading the recordings.

2. Method according to claim 1,
**characterised in that** a light source (7) is positioned in front of each of the two lenses (2), in which both light sources (7) are switched on simultaneously through a joint power supply.

3. Method according to claim 1 or 2,
**characterised in that** the releases for both cameras (1) are mechanically or electrically connected.

4. Method according to one of the previous claims, **characterised in that** an acoustic signal is recorded simultaneously by both video cameras and is used for synchronisation when playing back.

5. Method according to claim 3, **characterised in that** the light sources (7) are switched on for a short time, when the joint release (6) is operated.

6. Method according to one of the previous claims,
**characterised in that** the light sources (7) are switched on with a cyclical recurrence.

## Revendications

1. Procédé de synchronisation des enregistrements de deux caméras vidéos employées en parallèle pour la représentation tridimensionnelle d'une séquence d'images lors de la lecture,
**caractérisé en ce que**, lors de l'enregistrement, il est inséré/affiché est dans le champ de vision des deux caméras vidéos (1) un signal lumineux qui est enregistré simultanément par les deux caméras vidéos (1) et la lecture des enregistrements est synchronisée avec le signal lumineux enregistré, moyennant quoi, lors du fondu enchaîné des enregistrements, les signaux lumineux servent de repères pour la synchronisation de deux films.

2. Procédé selon la revendication 1,
**caractérisé en ce qu'**une source lumineuse (7) est placée devant chacun des deux objectifs (2), les deux sources lumineuses (7) étant allumées simultanément par le biais d'une alimentation électrique commune.

3. Procédé selon la revendication 1 ou 2,
**caractérisé en ce que** les déclencheurs des deux caméras (1) sont couplés mécaniquement ou électroniquement.

4. Procédé selon l'une quelconque des revendications précédentes, **caractérisé en ce qu'**un signal acoustique est enregistré simultanément par les deux caméras vidéos et qu'il est employés à des fins de synchronisation lors de la lecture.

5. Procédé selon la revendication 3, **caractérisé en ce que** les sources lumineuses (7) sont allumées momentanément en actionnant le déclencheur commun (6).

6. Procédé selon l'une quelconque des revendications précédentes, **caractérisé en ce que** les sources lumineuses (7) sont allumées cycliquement.
